# EUROPEAN PATENT APPLICATION

(11) **EP 2 075 575 A1**
(43) Date of publication of application: **01.07.2009**
(21) Application number: 08021683.1
(22) Date of filing: 12.12.2008
(51) Int. Cl.: G01N 27/407

(54) **Gas sensor, and air-fuel ratio controller and transportation apparatus incorporating the same**

(30) Priority: 27.12.2007 JP 2007336530
(71) Applicant: Yamaha Hatsudoki Kabushiki Kaisha, Iwata-shi, Shizuoka 438-8501 (JP)
(72) Inventor: Matsumoto, Hiroshi, Iwata-shi Shizuoka-ken 438-8501 (JP)
(74) Representative: Schoppe, Fritz

(57) **Abstract**

A gas sensor according to the present invention includes: a sensor element having a gas detection layer for detecting a predetermined gas; a lead for allowing electrical input/output to occur between the sensor element and the exterior; a terminal for electrically connecting the sensor element to the lead; and a bonding portion for connecting the terminal to the sensor element. The bonding portion contains a glass material and a metal material which has a melting point of 1000°C or above.

## Description

### BACKGROUND OF THE INVENTION

### 1. Field of the Invention:

The present invention relates to a gas sensor, and more particularly to a gas sensor for use in a high temperature environment. The present invention also relates to an air-fuel ratio controller and a transportation apparatus incorporating such a gas sensor.

### 2. Description of the Related Art:

From the standpoint of environmental issues and energy issues, it has been desired to improve the fuel consumption of internal combustion engines and reduce the emission amount of regulated substances (e.g., NOₓ) that are contained within exhaust gas from internal combustion engines. In order to meet these needs, it is necessary to appropriately control the ratio between fuel and air during combustion so that fuel combustion will occur always under optimum conditions. The ratio of air to fuel is called the "air-fuel ratio" (A/F). In the case where a ternary catalyst is employed, the optimum air-fuel ratio would be the stoichiometric air-fuel ratio. The "stoichiometric air-fuel ratio" is the air-fuel ratio at which air and fuel will combust just sufficiently.

When fuel is combusting at the stoichiometric air-fuel ratio, a certain amount of oxygen is contained within the exhaust gas. When the air-fuel ratio is smaller than the stoichiometric air-fuel ratio (i.e., the fuel concentration is relatively high), the oxygen concentration in the exhaust gas decreases relative to that under the stoichiometric air-fuel ratio. On the other hand, when the air-fuel ratio is greater than the stoichiometric air-fuel ratio (i.e., the fuel concentration is relatively low), the oxygen concentration in the exhaust gas increases. Therefore, by measuring the oxygen concentration in the exhaust gas, it is possible to estimate the deviation of the air-fuel ratio relative to the stoichiometric air-fuel ratio. This makes it possible to adjust the air-fuel ratio and control the fuel combustion so as to occur under the optimum conditions.

As oxygen sensors for measuring the oxygen concentration within exhaust gas, electromotive force-type oxygen sensors, as disclosed in Japanese Laid-Open Patent Publication No. 8-114571, and resistance-type oxygen sensors, as disclosed in Japanese Laid-Open Patent Publication No. 5-18921, are known. An electromotive force-type oxygen sensor measures oxygen concentration by measuring a difference in oxygen partial pressure between a reference electrode which is provided on the surface of a solid electrolyte layer and a measuring electrode (which are exposed to the air and the exhaust gas, respectively) as an electromotive force. On the other hand, a resistance-type oxygen sensor measures oxygen concentration by detecting changes in the resistivity of an oxide semiconductor layer which is exposed to exhaust gas.

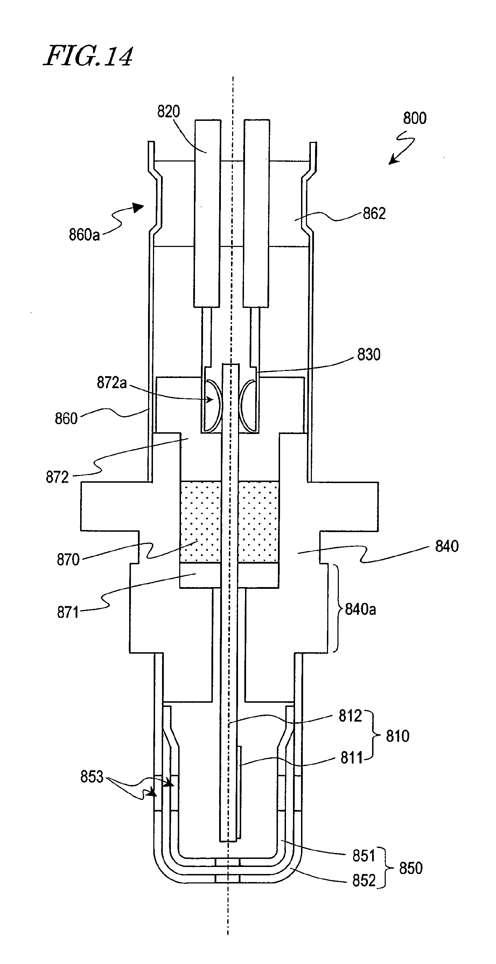

FIG. **14** shows a conventional oxygen sensor **800.** The oxygen sensor **800** shown in FIG. **14** includes a sensor element **810** and a housing **840** which the sensor element **810** is inserted into and secured to.

The sensor element **810** includes a gas detection layer **811** for detecting oxygen and a substrate **812** for supporting the gas detection layer **811.** The sensor element **810** is disposed at the top end of the housing **840** in such a manner that the gas detection layer **811** is exposed.

The housing **840** has a threaded screw portion **840a** (the thread not being shown in the figure) on its outer side face. By allowing the screw portion **840a** of the housing **840** to be screwed into a screw hole which is formed in an exhaust pipe, the oxygen sensor **800** is secured to the exhaust pipe.

At the top end of the housing **840,** a top-end cover **850** is provided so as to cover the gas detection layer **811** of the sensor element **810.** The top-end cover **850** is composed of an inner cover member **851** and an outer cover member **852.** Openings (vent holes) **853** for allowing exhaust gas in are formed in each of the inner cover member **851** and the outer cover member **852.**

A glass sealing portion **870** provides airtight sealing between the housing **840** and the sensor element **810.** The glass sealing portion **870** is formed by melting a glass material through a heat treatment, and allowing it solidify thereafter.

A pair of ceramic sleeves **871** and **872** are disposed so as to sandwich the glass sealing portion **870.** An aperture in which the sensor element **810** is to be inserted is formed in each of the ceramic sleeves **871** and **872.**

Electrical input/output between the sensor element **810** and the exterior occurs via leads **820.** Each lead **820** and the sensor element **810** are interconnected via a terminal **830.** The connection between the terminals **830** and the sensor element **810** is established by inserting the terminals **830,** which are made of metal leaf spring members, into a terminal insertion hole **872a** which is formed in a ceramic sleeve **872.**

At the base end side of the housing **840,** a tubular base end cover **860** is provided for accommodating the terminals **830** and the like. A rubber member **862,** having throughholes in which the leads **820** are to be inserted, is disposed inside the base end cover **860.** By inwardly crimping a portion **860a** (where the rubber member **862** is disposed) of the base end cover **860** of a metal material, the leads **820** are secured and the base end cover **860** is sealed.

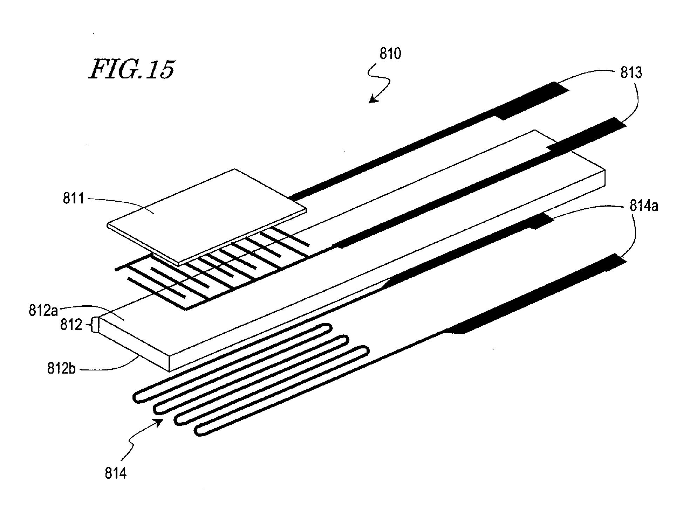

FIG. **15** shows an exemplary structure of the sensor element **810.** The sensor element **810** shown in FIG. **15** is a resistance-type sensor element, and an oxide semiconductor layer **811** is provided as a gas detection layer on a principal face **812a** of the substrate **812.** Detection electrodes **813** for detecting the resistivity of the oxide semiconductor layer **811** are also provided on the principal face **812a** of the substrate **812.** The resistivity of the oxide semiconductor layer **811** changes in accordance with the oxygen partial pressure in the ambient gas. By measuring this change in resistivity with the detection electrodes **813,** the oxygen concentration can be detected.

On the rear face **812b** side of the substrate **812,** a heater **814** for elevating the temperature of the oxide semiconductor layer **811** is provided. The heater **814** is a heating device of a resistance heating type, which performs heating by utilizing resistance loss. When a voltage is applied to heater electrodes **814a** which extend from the heater **814,** an electric current flows in the heating element that is formed in a predetermined shape, whereby the heating element is heated. By elevating the temperature of the gas detection layer **811** with the heater **814** to enable quick activation, the detection accuracy at the start of the internal combustion engine can be improved.

In the case where the sensor element **810** exemplified in FIG. **15** is used, electrical connections between the sensor element **810** and the terminals **830** are established as the terminals **830** abut with the detection electrodes **813** and the heater electrodes **814a** in the terminal insertion hole **872a** of the ceramic sleeve **872.**

Conventional oxygen sensors have a problem in that they are difficult to be reduced in size along the longitudinal direction, which makes downsizing difficult. For example, in the oxygen sensor **800** shown in FIG. **14**, leaf spring members which are made of a metal (e.g., an Ni-Cr alloy such as NCF750) are used as the terminals **830,** and the heat resistance of the leaf spring members is about 600°C. Therefore, in order to prevent the terminals **830** from being heated above this temperature, it is necessary to provide a long distance from the gas detection layer **811** (which is exposed to a high-temperature exhaust gas) to the connecting portion between the sensor element **810** and the terminals **830.** Therefore, it is difficult to reduce the size along the longitudinal direction, i.e., the length along the center axis direction (shown with a dash line in the figure) of the oxygen sensor **800.** Although connection between the sensor element **810** and the terminals **830** is established by utilizing elasticity of the leaf spring members in the illustrated structure, similar problems will also occur in the case of adopting a connection structure which utilizes the elasticity of metal spring members such as Belleville springs or ring springs.

Thus, downsizing of conventional oxygen sensors is difficult because the connection structure between the sensor element and the terminals lacks in heat resistance. In some transportation apparatuses (e.g. motorcycles), the spatial margin around the exhaust pipe is scarce, which has resulted in a desire for further downsizing of the oxygen sensor.

### SUMMARY OF THE INVENTION

The present invention has been made in view of the aforementioned problems, and an objective thereof is to provide a gas sensor that facilitates downsizing, in which a sensor element and terminals are connected via a connection structure having excellent heat resistance.

A gas sensor according to the present invention comprises: a sensor element having a gas detection layer for detecting a predetermined gas; a lead for allowing electrical input/output to occur between the sensor element and the exterior; a terminal for electrically connecting the sensor element to the lead; and a bonding portion for bonding the terminal to the sensor element, wherein, the bonding portion contains a glass material and a metal material which has a melting point of 1000°C or above.

In a preferred embodiment, the metal material contains at least one of platinum, tungsten, molybdenum, nickel, iron, rhenium, chromium, and titanium.

In a preferred embodiment, the metal material is platinum.

In a preferred embodiment, the sensor element is disposed so that a layer normal direction of the gas detection layer is generally parallel to a longitudinal direction of the gas sensor.

In a preferred embodiment, the sensor element further includes a substrate supporting the gas detection layer; and the sensor element is disposed so that a principal face of the substrate is generally perpendicular to the longitudinal direction of the gas sensor.

In a preferred embodiment, the substrate of the sensor element has a terminal insertion hole in which a top end of the terminal is inserted; and the terminal is bonded to the sensor element in the terminal insertion hole.

In a preferred embodiment, the terminal includes an electrode bar; and the electrode bar is bonded to the sensor element via the bonding portion.

In a preferred embodiment, the electrode bar is made of a metal material which has a melting point of 1000°C or above.

In a preferred embodiment, the electrode bar is made of platinum.

In a preferred embodiment, the electrode bar includes: an electrode bar main body which is made of a metal material containing at least one of tungsten, molybdenum, nickel, iron, rhenium, chromium, and titanium; and a platinum plating layer formed on a surface of the electrode bar main body.

In a preferred embodiment, the gas sensor according to the present invention further comprises a ceramic member through which the electrode bar is inserted, wherein an end of the ceramic member that is closer to the sensor element surrounds the electrode bar and is bonded to the sensor element.

In a preferred embodiment, the gas sensor according to the present invention further comprises a glass sealing portion provided between the electrode bar and the ceramic member.

In a preferred embodiment, the gas sensor according to the present invention is an oxygen sensor.

An air-fuel ratio controller according to the present invention comprises a gas sensor having the above construction.

A transportation apparatus according to the present invention comprises an air-fuel ratio controller having the above construction.

In a gas sensor according to the present invention, a bonding portion containing a glass material and a metal material which has a melting point of 1000°C or above serves to bond a sensor element to a terminal. Such a bonding portion has an excellent heat resistance. In addition to the excellent heat resistance of the bonding portion itself, the use of such a bonding portion makes it unnecessary to employ a material having some special physical properties (e.g., a leaf spring member) for the material of the terminal. In other words, there are fewer constraints on the material of the terminal, and any material with a high heat resistance can be used. Therefore, in the gas sensor according to the present invention, connection between the sensor element and the terminal is achieved with a connection structure that has an excellent heat resistance. Therefore, there is no need to provide a long distance from a gas detection layer (which is exposed to a high-temperature exhaust gas) to the connection between the sensor element and the terminal (i.e., the bonding portion). As a result, it is possible to reduce the size of the gas sensor along the longitudinal direction, i.e., the length of the gas sensor along the central axis direction, which allows the gas sensor to be downsized.

As the metal material contained in the bonding portion, that which includes at least one of platinum, tungsten, molybdenum, nickel, iron, rhenium, chromium, and titanium is suitably used.

From the standpoint of durability of the gas sensor, it is most preferable that the metal material contained in the bonding portion is platinum. Platinum not only has a high melting point, but also excels in oxidation resistance. In other words, the surface of platinum is unlikely to be oxidized even when exposed to a high-temperature exhaust gas. Therefore, a bonding portion which only contains platinum as the metal material is unlikely to allow its electrical conductivity to be lowered, and can be used for a long time in an environment with a high-temperature exhaust gas.

The sensor element is preferably disposed so that the layer normal direction of the gas detection layer is generally parallel to the longitudinal direction of the gas sensor. By adopting such positioning ("lateral positioning "), it becomes possible to further reduce the size of the gas sensor along the longitudinal direction, whereby the gas sensor can be further downsized.

In the case where the sensor element further includes a substrate supporting the gas detection layer, the aforementioned lateral positioning can be realized by disposing the sensor element so that a principal face of the substrate is generally perpendicular to the longitudinal direction of the gas sensor.

In the case where lateral positioning is adopted, the substrate of the sensor element typically has a terminal insertion hole through which a top end of the terminal is inserted, and the terminal is bonded to the sensor element in the terminal insertion hole.

In a construction where the terminal includes an electrode bar, the electrode bar is bonded to the sensor element via the bonding portion. In order to enhance the heat resistance of the connection structure between the sensor element and the terminal, it is preferable that the electrode bar is also made of a material having a high heat resistance.

Specifically, it is preferable that the electrode bar is made of a metal material which has a melting point of 1000°C or above.

It is most preferable that the electrode bar is made of platinum. An electrode bar made of platinum is unlikely to be oxidized at the surface, so that its electrical conductivity is unlikely to decrease even when it is exposed to a high-temperature exhaust gas.

Moreover, it is preferable to employ a construction where the electrode bar includes an electrode bar main body which is made of a metal material containing at least one of tungsten, molybdenum, nickel, iron, rhenium, chromium, and titanium, as well as a platinum plating layer which is formed on the surface of the electrode bar main body. By employing such a construction, it becomes possible to reduce the production cost as compared to the case where the entire electrode bar is made of platinum, while sufficiently reducing a decrease in the electrical conductivity of the electrode bar.

In the case where the gas sensor further includes a ceramic member through which the electrode bar is inserted, the end of the ceramic member that is closer to the sensor element may surround the electrode bar and be bonded to the sensor element, whereby the sensor element is held in place by not only the electrode bar but also the ceramic member. As a result, the sensor element can be firmly connected to the gas sensor, and the gas sensor will have an improved reliability against vibrations and impacts.

Moreover, a glass sealing portion may be provided between the electrode bar and the ceramic member, whereby the glass sealing portion serves to bond the electrode bar to the ceramic member, so that the electrode bar obtains an improved mechanical strength, and the gas sensor will have a further improved reliability against vibrations and impacts.

The present invention is broadly applicable to gas sensors in general, and is suitably used for an oxygen sensor for detecting oxygen, for example. An oxygen sensor according to the present invention is suitably used in an air-fuel ratio controller for controlling the air-fuel ratio of an internal combustion engine, and an air-fuel ratio controller incorporating the oxygen sensor according to the present invention is suitably used in various types of transportation apparatuses.

According to the present invention, there is provided a gas sensor that facilitates downsizing, in which a sensor element and terminals are connected via a connection structure having excellent heat resistance.

Other features, elements, processes, steps, characteristics and advantages of the present invention will become more apparent from the following detailed description of preferred embodiments of the present invention with reference to the attached drawings.

### BRIEF DESCRIPTION OF THE DRAWINGS

FIG. **1** is a cross-sectional view schematically showing an oxygen sensor **100** according to a preferred embodiment of the present invention.

FIG. **2** is a cross-sectional view showing enlarged the neighborhood of a sensor element included in the oxygen sensor **100.**

FIG. **3A** is an upper plan view showing a sensor element, as viewed in a central axis direction of the oxygen sensor; and FIG. **3B** is the same view as FIG. **3A** from which the gas detection layer is omitted.

FIG. **4** is a diagram showing comparative sizes of prototypes of the oxygen sensor **100** according to a preferred embodiment of the present invention and a conventional oxygen sensor **800.**

FIG. **5** is a cross-sectional view showing enlarged the neighborhood of a sensor element included in the oxygen sensor **100.**

FIG. **6** is a cross-sectional view schematically showing another oxygen sensor **200** according to a preferred embodiment of the present invention.

FIG. **7** is a cross-sectional view showing enlarged the neighborhood of a sensor element included in the oxygen sensor **200.**

FIG. **8** is a cross-sectional view schematically showing still another oxygen sensor **300** according to a preferred embodiment of the present invention.

FIG. **9** is a cross-sectional view showing enlarged the neighborhood of a sensor element included in the oxygen sensor **300.**

FIG. **10** is a cross-sectional view schematically showing an electromotive force-type sensor element.

FIG. **11** is a cross-sectional view schematically showing a limit current-type sensor element.

FIG. **12** is a side view schematically showing a motorcycle **500** including the oxygen sensor **100.**

FIG. **13** is a diagram schematically showing a control system of an internal combustion engine of the motorcycle **500** shown in FIG. **12****.**

FIG. **14** is a cross-sectional view schematically showing a conventional oxygen sensor **800.**

FIG. **15** is an exploded perspective view schematically showing a sensor element included in the oxygen sensor **800.**

### DETAILED DESCRIPTION OF PREFERRED EMBODIMENTS

Hereinafter, preferred embodiments of the present invention will be described with reference to the accompanying drawings. Note that, although oxygen sensors for detecting oxygen will be illustrated below, the present invention is not limited to oxygen sensors but can be suitably used for gas sensors in general.

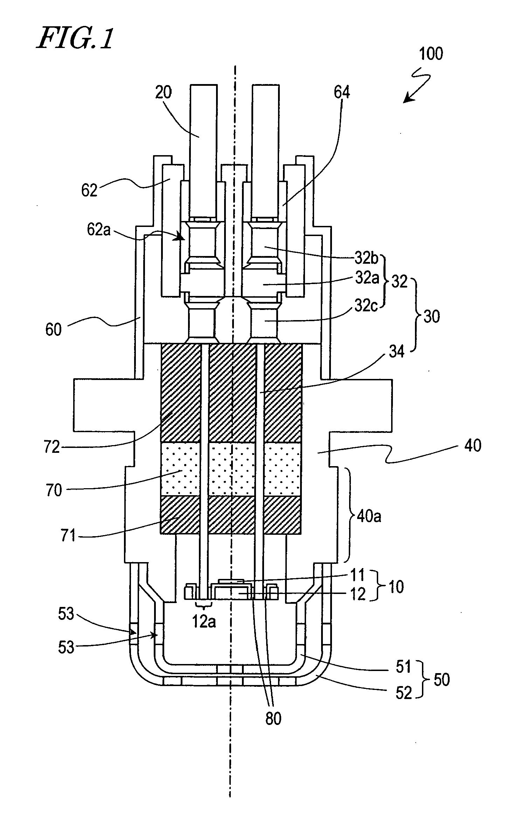

FIG. **1** shows an oxygen sensor **100** according to the present embodiment. The oxygen sensor **100** includes: a sensor element **10** having a gas detection layer **11** for detecting a predetermined gas (which herein is oxygen); leads **20** for enabling electrical input/output between the sensor element **10** and the exterior; and terminals **30** for electrically connecting the sensor element **10** and the leads **20.**

The oxygen sensor **100** further includes a housing **40** for accommodating some of the constituent elements of the oxygen sensor **100** and securing the oxygen sensor **100** to an exhaust pipe. On the outer side face of the housing **40,** a threaded screw portion **40a** is provided (the thread not being shown in the figure). By allowing the screw portion **40a** to be screwed into a screw hole which is formed in the exhaust pipe, the oxygen sensor **100** can be secured to the exhaust pipe. The housing **40** is typically made of a metal material (e.g. stainless steel).

As shown in FIG. **1****,** the sensor element **10** is disposed at the top end side of the housing **40.** In addition to the aforementioned gas detection layer **11,** the sensor element **10** includes a substrate **12** for supporting the gas detection layer **11.** The substrate **12** has terminal insertion holes **12a** into which the top ends of the terminals **30** are inserted, and the terminals **30** and the sensor element **10** are bonded within the terminal insertion holes **12a,** at bonding portions **80** (described later). The sensor element **10** in the present embodiment is a resistance-type sensor element. The specific construction of the resistance-type sensor element **10** will be described later.

At the top end side of the housing **40,** a top-end cover **50** is provided so as to cover the sensor element **10.** The top-end cover **50** has a double structure composed of an inner cover member **51** and an outer cover member **52.** Openings (vent holes) **53** for allowing exhaust gas in are formed in each of the inner cover member **51** and the outer cover member **52.** The inner cover member **51** and the outer cover member **52** are typically made of a metal material (e.g. stainless steel), and are bonded to the housing **40** by welding, for example.

At the base end side of the housing **40,** a tubular (e.g. cylindrical) base end cover **60** is provided so as to cover the portions of the terminals **30** exposed outside the housing **40.** The base end cover **60** is typically made of a metal material (e.g. stainless steel), and is bonded to the housing **40** by welding, for example. At the farther end of the base end cover **60** from the housing **40,** a sealing member **62** for sealing the base end cover **60** is provided.

The sealing member **62** has columnar throughholes **62a** into which the leads **20** and the terminals **30** are inserted. The sealing member **62** is made of a heat-resistant resin. As the heat-resistant resin, a thermoplastic resin such as polyimide resin may be used, or a thermosetting resin such as phenolic resin may be used.

The leads **20** are made of a metal material (e.g. copper), and are coated with an insulation material (a resin such as PTFE). The leads **20** are further covered by a watertight cap **64** in the shape of a bellows which is made of fluoro rubber, silicone rubber, or the like, and are inserted into the throughholes **62a** together with the watertight cap **64.** The leads **20** are connected to the exterior (e.g. a computer of an air-fuel ratio controller), such that any electrical input/output between the sensor element **10** and the exterior (e.g. output of a detection signal from the sensor element **10** and supply of electric power to the sensor element **10**) occurs via the leads **20.**

Each terminal **30** includes a press-fitted portion **32** which is press-fitted into a throughhole **62a** in the sealing member **62,** and an electrode bar (wire) **34** which extends from the press-fitted portion **32** toward the sensor element **10.**

The press-fitted portion **32** is made of a metal material (e.g. stainless steel or a nickel alloy). A central portion **32a** of the press-fitted portion **32** has a generally columnar shape, with an outer diameter which is slightly larger than that of each throughhole **62a** in the sealing member **62.** Therefore, by pressing the press-fitted portion **32** into a throughhole **62a** in the sealing member **62,** the throughhole **62a** is substantially completely closed. Moreover, as a result of this pressing, the outer diameter of the sealing member **62** also becomes slightly larger than its original outer diameter. In other words, the sealing member **62** becomes press-fitted in the base end cover **60.** As a result, substantially complete closing also occurs between the base end cover **60** and the sealing member **62.**

The press-fitted portion **32** is crimped at one end **32b** so as to be connected to a lead **20.** Moreover, the press-fitted portion **32** is crimped at another end **32c** so as to be connected to an electrode bar **34.** It will be appreciated that connection between the other end **32c** of the press-fitted portion **32** and the electrode bar **34** may be made via welding (e.g. resistance welding or laser welding).

The electrode bar **34** is made of a metal material, and, within a terminal insertion hole **12a** of the substrate **12,** the top end of the electrode bar **34** is bonded to the sensor element **10.** A glass sealing portion **70** provides airtight sealing between the electrode bar **34** and the housing **40.** The glass sealing portion **70** is formed by melting a glass material through a heat treatment, and allowing it solidify thereafter. As the glass material, various materials which are known as sealing materials can be used. Since the glass sealing portion **70** is provided, the exhaust gas is prevented from entering into the base end side of the housing **40,** i.e., the space in which the sealing member **62,** the terminals **30,** and the leads **20** are provided.

A pair of ceramic members (ceramic sleeves) **71** and **72** are disposed so as to sandwich the glass sealing portion **70.** Hereinafter, the ceramic member **71** that is disposed at the sensor element **10** side of the glass sealing portion **70** will be referred to as a "first ceramic member", whereas the ceramic member **72** that is disposed at the opposite side of the glass sealing portion **70** from the first ceramic member **71** will be referred to as a "second ceramic member". The first and second ceramic members **71** and **72** are made of a ceramic material having excellent heat resistance and insulation (e.g. alumina), and each have apertures into which the electrode bars **34** are inserted.

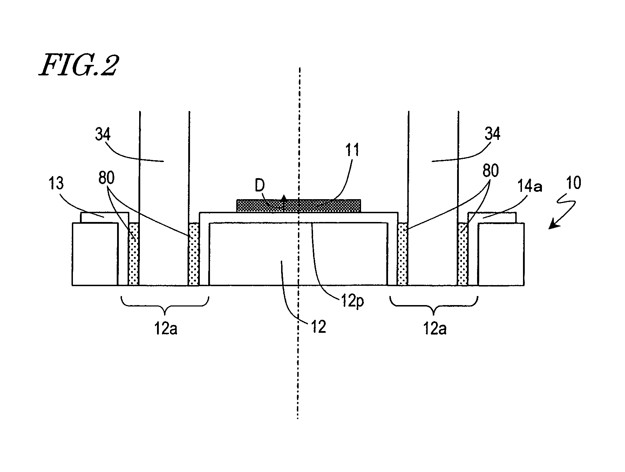

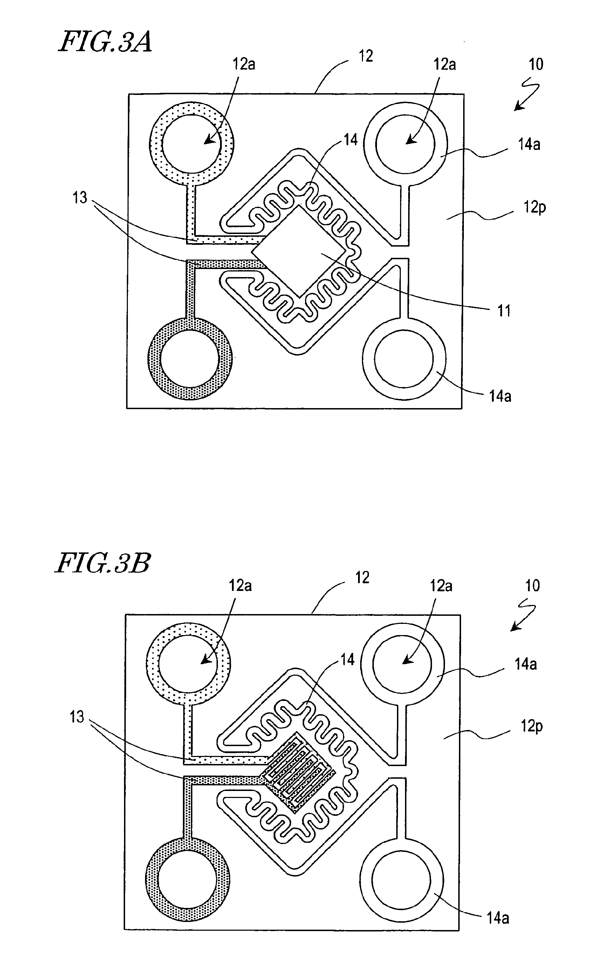

Next, with reference to FIG. **2** and FIG. **3****,** the construction of the resistance-type sensor element **10** will be described specifically. FIG. **2** is a cross-sectional view showing enlarged the neighborhood of the sensor element **10** of the oxygen sensor **100.** FIG. **3A** is an upper plan view showing the sensor element **10** as viewed in the center axis direction of the oxygen sensor **100** (shown with a dash line in FIG. **1** and FIG. **2****),** whereas FIG. **3B** is the same view as FIG. **3A** from which the gas detection layer **11** is omitted.

As has already been described, the sensor element **10** includes the gas detection layer **11** and the substrate **12** supporting the gas detection layer **11.**

The gas detection layer **11** is made of an oxide semiconductor, and is provided on a principal face **12p** of the substrate **12.** The gas detection layer **11** made of an oxide semiconductor has a porous structure containing minute oxide semiconductor particles, and releases or absorbs oxygen in accordance with the oxygen partial pressure in the atmosphere (i.e., exhaust gas). This causes a change in the oxygen vacancy concentration in the gas detection layer **11,** which in turn causes a change in the resistivity of the gas detection layer **11.** As the oxide semiconductor, titania (titanium dioxide) or ceria (cerium dioxide) can be used, for example.

The substrate **12** is made of an insulative material (typically, a ceramic material such as alumina). On the principal face **12p** of the substrate **12,** as shown in FIGS. **3A** and **3B****,** detection electrodes **13** for detecting the resistivity of the gas detection layer **11** and a heater **14** for elevating the temperature of the gas detection layer **11** are provided.

The detection electrodes **13** are made of an electrically conductive material, which may typically be a metal material such as platinum, a platinum-rhodium alloy, or gold. In order to efficiently measure changes in the resistivity of the gas detection layer **11,** it is preferable that the portions of the detection electrodes **13** that overlie the gas detection layer **11** are formed in an interdigitated fashion, as shown in FIG. **3B****.**

The heater **14** is a resistance heating-type heating device, which performs heating by utilizing resistance loss. The heater **14** is composed of a pattern which meanders around the gas detection layer **11.** As the material of the heater **14,** a metal material such as platinum or tungsten can also be used. Moreover, a nonmetal material can also be used, e.g., an oxide conductor such as rhenium oxide.

Heating occurs when a voltage is applied to heater electrodes **14a** which extend from the heater **14.** By elevating the temperature of the gas detection layer **11** with the heater **14** to enable quick activation, the detection accuracy at the start of an internal combustion engine can be improved. Although a construction is illustrated herein where the heater **14** is provided on the principal face **12p** of the substrate **12,** the heater **14** may alternatively be provided on a rear face of the substrate **12.**

Although not illustrated in the figures, it is preferable that a catalyst layer is provided on the oxide gas detection layer **11.** The catalyst layer contains a catalytic metal. Due to the catalytic action of the catalytic metal, at least one kind of substance other than the gas to be detected (i.e., oxygen) is decomposed. Specifically, any gas or microparticles (e.g., the hydrocarbon which has failed to completely combust, carbon, and nitrogen oxide) which may unfavorably affect the oxygen detection by the gas detection layer **11** is decomposed, whereby such gas or microparticles are prevented from attaching to the surface of the gas detection layer **11.** As a catalytic metal, platinum may be used, for example.

Next, a connection structure between the sensor element **10** and the terminals **30** in the oxygen sensor **100** will be described.

As shown in FIG. **1** and FIG. **2****,** the oxygen sensor **100** of the present embodiment includes bonding portions **80** at which the terminals **30** and the sensor element **10** are bonded. Herein, the bonding portions **80** are provided within the terminal insertion holes **12a** of the substrate **12,** such that, via the bonding portions **80,** the electrode bars **34** of the terminals **30** are bonded to the sensor element **10** (or more specifically, to the detection electrodes **13** and the heater electrodes **14a** of the sensor element **10**) in the terminal insertion holes **12a.**

The bonding portions **80** in the present embodiment contain a glass material and a metal material which has a melting point of 1000°C or above. That is, the bonding portions **80** are made of a mixture containing a glass material and a metal material which has a high melting point. With the bonding portions **80** as such, the sensor element **10** and the terminals **30** are physically bonded and electrically connected.

As described above, in the oxygen sensor **100** of the present embodiment, the bonding portions **80** containing a glass material and a metal material which has a melting point of 1000°C or above serve to bond the sensor element **10** to the terminals **30.** Such bonding portions **80** have an excellent heat resistance. In addition to the excellent heat resistance of the bonding portions **80** themselves, the use of such bonding portions **80** makes it unnecessary to employ a material having some special physical properties (e.g., leaf spring members) for the material of the terminals **30.** In other words, there are fewer constraints on the selection of the material of the terminals **30,** and any material with a high heat resistance can be used. Therefore, in the oxygen sensor **100** of the present embodiment, connection between the sensor element **10** and the terminals **30** is achieved with a connection structure that has an excellent heat resistance. Therefore, there is no need to provide a long distance from the gas detection layer **11** (which is exposed to a high-temperature exhaust gas) to the connection between the sensor element **10** and the terminals **30** (i.e., the bonding portions **80**)**.** As a result, it is possible to reduce the size of the oxygen sensor **100** along the longitudinal direction, i.e., the length of the oxygen sensor **100** along the central axis direction, which allows the oxygen sensor **100** to be downsized.

Specifically, the bonding portions **80** are formed by heating and melting a mixture containing a glass material and a powder of metal material which has a melting point of 1000°C or above, and thereafter solidifying the mixture. As the glass material, various materials which are known as sealing materials can be used, e.g., a ZnO-SiO₂-MgO type glass material, a ZnO-B₂O₃-Bi₂O₃ type glass material, or an SiO₂-B₂O₃-MgO type glass material. In order to ensure adequate electrical connection between the sensor element **10** and the terminals **30,** it is preferable that the bonding portions **80** contain a 20wt% or more of a metal material. When the percentage content of the metal material is below 20wt%, the resistance value of the bonding portions **80** will increase drastically. However, in order to maintain a sufficiently high bonding strength with the glass material and to minimize an increase in the production cost from using an expensive metal material, it is preferable that the percentage content of the metal material is 70wt% or less.

As the metal material contained in the bonding portions **80,** specifically, that which includes at least one of platinum (Pt), tungsten (W), molybdenum (Mo), nickel (Ni), iron (Fe), rhenium (Re), chromium (Cr), and titanium (Ti) can be used. The melting points of platinum, tungsten, molybdenum, nickel, iron, rhenium, chromium, and titanium are each 1000°C or above, as are shown in Table 1 below. When forming the bonding portions **80,** a powder consisting of only one, or two or more, of the aforementioned metallic elements may be added to the glass material, or a powder of an alloy containing any of the aforementioned metallic elements may be added to the glass material. As the alloy which has a melting point of 1000°C or above, a W-Re (tungsten -rhenium) alloy or a Pt-Re (platinum -rhenium) alloy can be used, for example.

**[Table 1]**

| metal material | melting point (°C) |
|---|---|
| platinum | 1772 |
| tungsten | 3400 |
| molybdenum | 2617 |
| nickel | 1453 |
| iron | 1535 |
| rhenium | 3180 |
| chromium | 1857 |
| titanium | 1725 |

From the standpoint of durability of the oxygen sensor **100,** it is most preferable that the metal material contained in the bonding portions **80** is platinum. Platinum not only has a high melting point but also excels in oxidation resistance. In other words, the surface of platinum is unlikely to be oxidized even when exposed to a high-temperature exhaust gas. Therefore, a bonding portion **80** which only contains platinum as the metal material is unlikely to allow its electrical conductivity to be lowered, and can be used for a long time in an environment with a high-temperature exhaust gas. However, since platinum is expensive, from the standpoint of reducing the production cost, it is preferable to use the other materials exemplified above.

Moreover, in the oxygen sensor **100** of the present embodiment, as shown in FIG. **1** and FIG. **2****,** the sensor element **10** is disposed in such a manner that the layer normal direction (shown by arrow **D** in FIG. **2**) of the gas detection layer 11 is generally parallel to the longitudinal direction (central axis direction) of the oxygen sensor **100.** Stated otherwise, the sensor element **10** is disposed so that the principal face **12p** of the substrate **12** is generally perpendicular to the longitudinal direction of the oxygen sensor **100.** On the other hand, in the conventional oxygen sensor **800** shown in FIG. **14****,** the sensor element **810** is disposed so that the layer normal direction of the gas detection layer **811** is generally perpendicular to the longitudinal direction of the oxygen sensor **800** (i.e., so that the principal face of the substrate **812** is generally parallel to the longitudinal direction of the oxygen sensor **800**)**.**

That is, the sensor element **10** of the present embodiment is disposed at an angle which is different by approximately 90° from the conventional angle. In the present specification, a positioning of the sensor element **10** (i.e., the present embodiment) such that the layer normal direction of the gas detection layer **11** is generally parallel to the longitudinal direction (central axis direction) of the oxygen sensor **100** will be referred to as a "lateral positioning ". On the other hand, a positioning of the sensor element **810** (i.e., conventional) such that the layer normal direction of the gas detection layer **811** is generally parallel to the longitudinal direction of the oxygen sensor **800** will be referred to as a "vertical positioning".

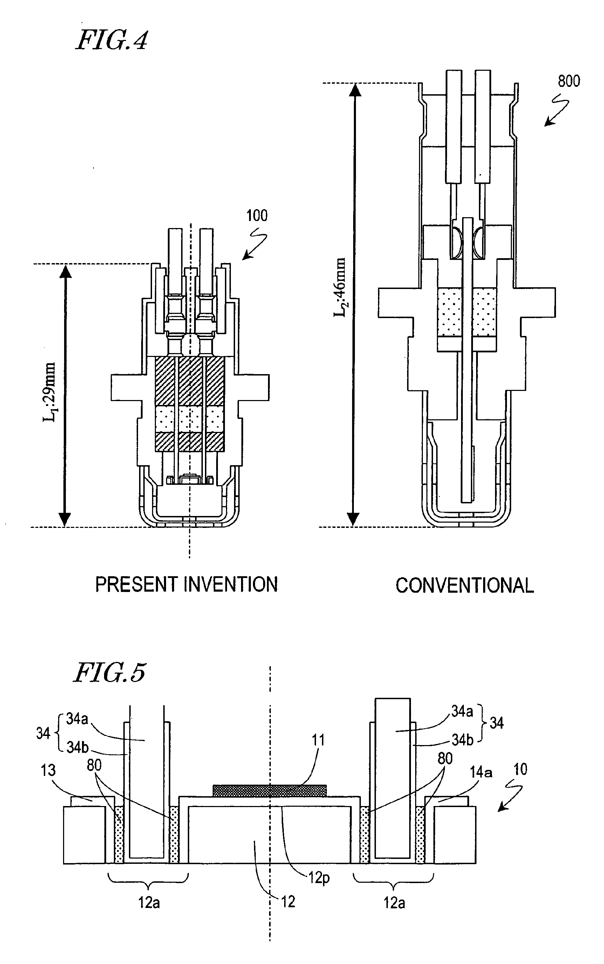

By adopting a lateral positioning as in the present embodiment, it becomes possible to reduce the size of the oxygen sensor **100** along the longitudinal direction, whereby the oxygen sensor **100** can be further downsized. FIG. **4** shows comparative sizes of a prototype of the oxygen sensor **100** of the present embodiment in which lateral positioning is adopted and a prototype of the conventional oxygen sensor **800** in which vertical positioning is adopted. As shown in FIG. **4****,** the oxygen sensor **100** of the present embodiment has a length **L₁** of 29 mm, whereas the conventional oxygen sensor **800** has a length **L₂** of 46 mm. In other words, in the oxygen sensor **100** of the present embodiment, the size along the longitudinal direction is reduced to about 2/3 of the conventional size.

Note that, in the lateral positioning, the layer normal direction of the gas detection layer **11** does not need to be strictly parallel to the longitudinal direction of the oxygen sensor **100,** but it suffices so long as the layer normal direction of the gas detection layer **11** is generally parallel to the longitudinal direction of the oxygen sensor **100.** Specifically, the angle between the layer normal direction of the gas detection layer **11** and the longitudinal direction of the oxygen sensor **100** may be equal to or less than 10°. If the angle therebetween is equal to or less than 10°, the size of the oxygen sensor **100** along the longitudinal direction is hardly increased, so that basically the same level of downsizing can be realized as in the case where the layer normal direction of the gas detection layer **11** is strictly parallel to the longitudinal direction of the oxygen sensor **100.**

Moreover, the present invention is suitable also in the case where vertical positioning is adopted. When vertical positioning is adopted, it is necessary to use a long substrate in the conventional connection structure which lacks in heat resistance, in order to provide a sufficient distance from the gas detection layer to the connection between the sensor element and the terminals (e.g., the substrate **812** as shown in FIG. **14**). On the other hand, according to the present invention, it is unnecessary to use a long substrate because it is not a problem even if the connection between the sensor element and the terminals is close to the gas detection layer. Therefore, the oxygen sensor can be downsized even when vertical positioning is adopted.

In order to enhance the heat resistance of the connection structure between the sensor element **10** and the terminals **30,** it is preferable that the electrode bars **34** are also made of a material having a high heat resistance. Specifically, the electrode bars **34** are preferably made of a metal material which has a melting point of 1000°C or above. As has already been described, platinum has an excellent oxidation resistance, and thus its surface is unlikely to be oxidized. Therefore, from the standpoint of minimizing the decrease in the electrical conductivity of the electrode bars **34** when exposed to a high-temperature exhaust gas, it is most preferable that the electrode bars **34** are made of platinum.

However, platinum is expensive. Therefore, from the standpoint of production cost, any other metal material that has a melting point of 1000 °C or above (besides platinum) may be used. Specifically, as the material of the electrode bars **34,** a metal material containing at least one of tungsten, molybdenum, nickel, iron, rhenium, chromium, and titanium may be used.

Moreover, as shown in FIG. **5****,** it is also preferable that each electrode bar **34** includes an electrode bar main body **34a** which is made of a metal material containing at least one of tungsten, molybdenum, nickel, iron, rhenium, chromium, and titanium, as well as a platinum plating layer **34b** which is formed on the surface of the electrode bar main body **34a.** By employing such a construction, it becomes possible to reduce the production cost as compared to the case where the entire electrode bar **34** is made of platinum, while sufficiently reducing the decrease in the electrical conductivity of the electrode bar **34** (particularly, a decrease in electrical conductivity due to oxidization of the neighborhood of the portion connected to the sensor element **10**).

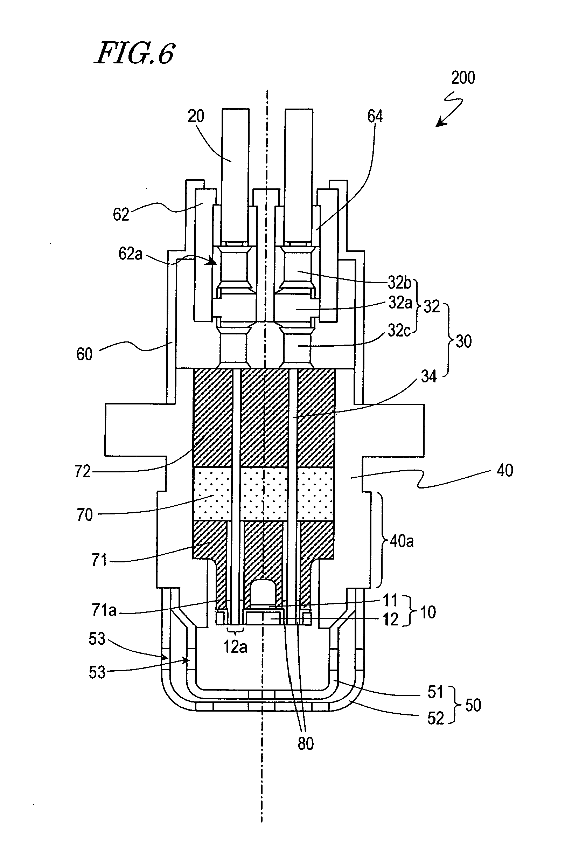

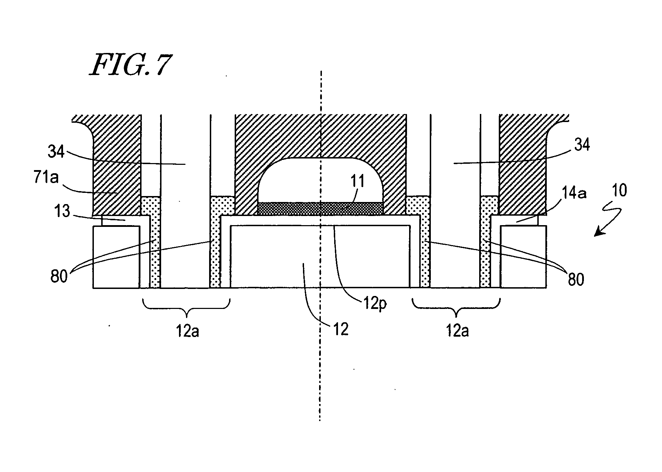

Next, with reference to FIG. **6** and FIG. **7****,** another oxygen sensor **200** according to the present embodiment will be described. FIG. **6** is a cross-sectional view schematically showing the oxygen sensor **200.** FIG. **7** is a view showing enlarged the neighborhood of the sensor element **10** of the oxygen sensor **200.**

In the oxygen sensor **200,** an end **71a** of the first ceramic member (ceramic sleeve) **71** that is closer to the sensor element **10** than is the other end extends toward the top end of the housing **40,** so as to surround each electrode bar **34.** The end **71a** is also bonded to the sensor element **10.** Specifically, bonding portions **80** for bonding the sensor element **10** to the terminals **30** extend also above the terminal insertion holes **12a** of the substrate **12,** such that the end **71a** of the first ceramic member **71** is bonded to the sensor element **10** via the bonding portions **80.**

Thus, in the oxygen sensor **200,** the end **71a** of the first ceramic member **71** that is closer to the sensor element **10** surrounds the electrode bars **34** and is bonded to the sensor element **10.** Therefore, the sensor element **10** is held in place by not only the electrode bars **34** but also the first ceramic member **71.** As a result, the sensor element **10** can be more firmly connected to the oxygen sensor **200** than in the case where the bare electrode bars **34** are revealed as shown in FIG. **1** and the like figures (i.e., the sensor element **10** is held in place only by the electrode bars **34**). Therefore, the oxygen sensor **200** will have an improved reliability against vibrations and impacts.

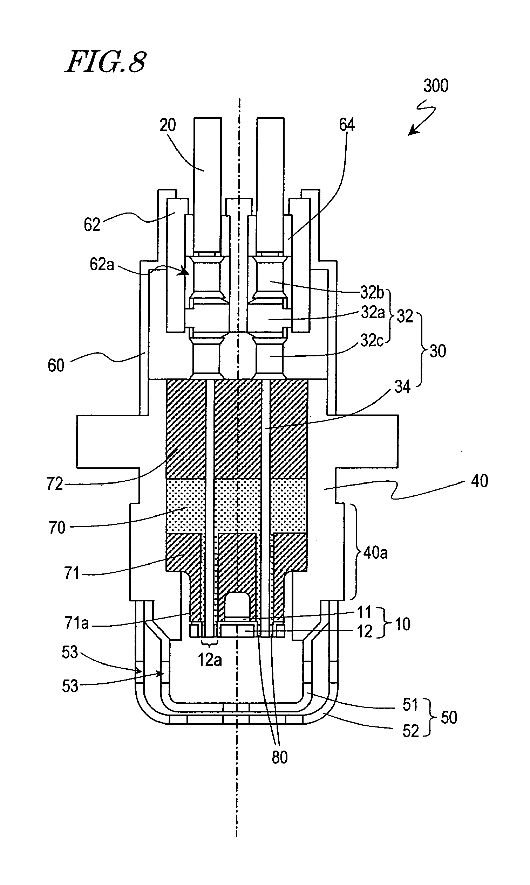

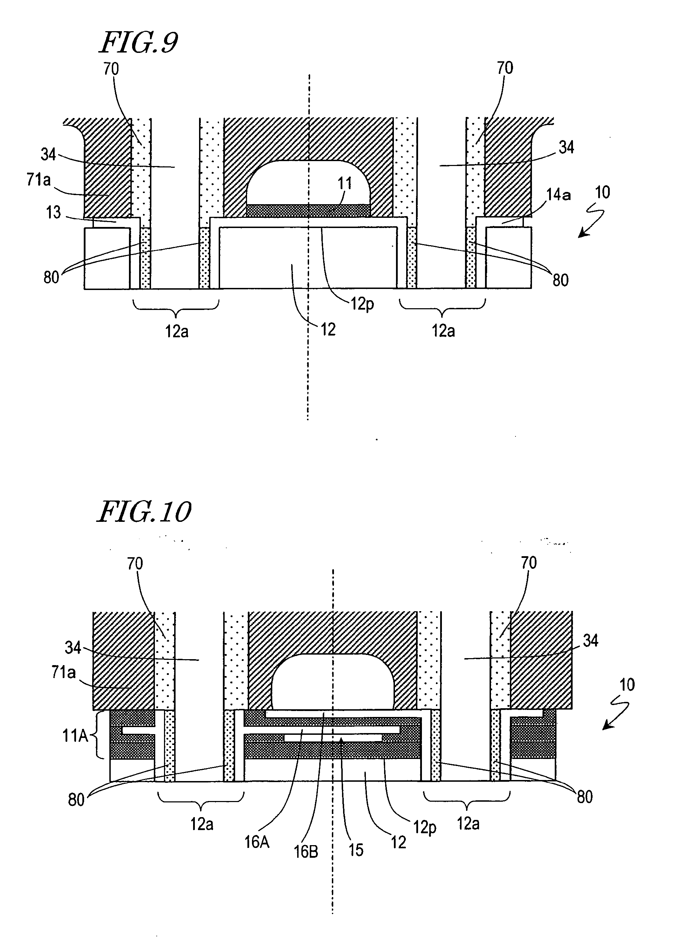

Alternatively, in still another oxygen sensor **300** of the present embodiment, as shown in FIG. **8** and FIG. **9****,** the glass sealing portion **70** may be allowed to exist also between the electrode bars **34** and the first ceramic member **71.** In this case, the glass sealing portion **70** serves to bond the electrode bars **34** to the first ceramic member **71,** so that the electrode bars **34** obtain an improved mechanical strength. As a result, the oxygen sensor **300** will have a further improved reliability against vibrations and impacts.

Although a resistance-type sensor element **10** has been illustrated in the above descriptions, various devices that are capable of detecting oxygen can be used as the sensor element **10.** For example, an electromotive force-type sensor element **10** as shown in FIG. **10** may be used.

A gas detection layer **11A** of the sensor element **10** shown in FIG. **10** is made of a solid electrolyte. As the solid electrolyte, zirconia or the like can be used. Near the center of the gas detection layer **11A** is formed a reference atmosphere chamber **15.** Into the reference atmosphere chamber **15,** a gas to serve as a reference for measurement (i.e., the atmospheric air) is introduced.

A reference electrode **16A** is provided so as to be in contact with the gas detection layer **11A** and also exposed to the atmospheric air. Moreover, a measuring electrode **16B** is provided so as to be in contact with the gas detection layer **11A** and also exposed to the exhaust gas. The reference electrode **16A** and the measuring electrode **16B** are connected to the electrode bars **34** within the terminal insertion holes **12a** of the substrate **12,** via the bonding portions **80.** Although not shown in the figures, a heater for elevating the temperature of the gas detection layer **11A** is provided on the rear face of the substrate **12.**

Between the reference electrode **16A** and the measuring electrode **16B,** an electromotive force which is in accordance with the oxygen partial pressures in the respective gases (i.e., the atmospheric air and the exhaust gas) is generated. Therefore, by measuring this electromotive force, the oxygen that is contained in the exhaust gas can be detected.

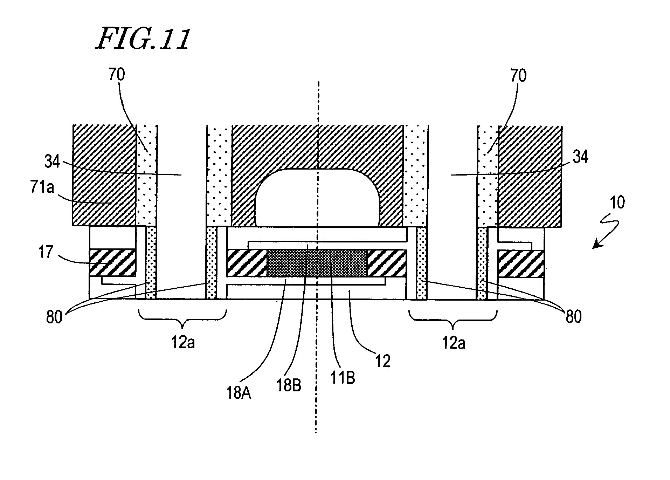

Alternatively, a limit current-type sensor element **10** as shown in FIG. **11** may be used. A gas detection layer **11B** of the sensor element **10** shown in FIG. **11** is also made of a solid electrolyte. A negative electrode **18A** and a positive electrode **18B** are provided so as to sandwich the gas detection layer **11B.** When a voltage is applied between the negative electrode **18A** and the positive electrode **18B,** at the negative electrode **18A,** oxygen is deprived of its electrons and becomes ionized, whereby an injection of oxygen ions into the gas detection layer **11B** occurs. At the positive electrode **18B,** the oxygen ions which have traveled within the gas detection layer **11B** from the negative electrode **18A** toward the positive electrode **18B** receive electrons, and are released as oxygen. This phenomenon is known as an oxygen pump action of solid electrolytes.

Supply of oxygen to the negative electrode **18A** occurs via a diffusion bottleneck layer **17** which is provided so as to surround the gas detection layer **11B.** The diffusion bottleneck layer **17** is made of a porous ceramic material (e.g., a porous spinel), and bottlenecks the gas diffusion of oxygen. In other words, supply of oxygen to the negative electrode **18A** is limited by the diffusion bottleneck layer **17.** Therefore, saturation current characteristics will appear in the current-voltage characteristics between the negative electrode **18A** and the positive electrode **18B.** Such a saturation current is referred to as a limit current, whose size is determined by the oxygen concentration in the atmosphere.

Thus, in the limit current-type sensor element **10,** supply of oxygen to the negative electrode **18A** is achieved via gas diffusion, and an oxygen concentration is detected by measuring a limit current which is in proportion to the oxygen concentration. Although not shown in the figure, at rear face side of the substrate **12,** there is provided a heater for elevating the temperature of the gas detection layer **11B,** which is made of a solid electrolyte, to a temperature that is suitable for ion conduction.

The oxygen sensors **100, 200,** and **300** according to the present embodiments are suitably used for detecting oxygen in the exhaust gas which is discharged from an internal combustion engine of any of various types of transportation apparatuses. Since the oxygen sensors **100, 200,** and **300** according to the present embodiments facilitate downsizing, they are especially suitably used for transportation apparatuses with scarce spatial margins around the exhaust pipe, e.g., motorcycles.

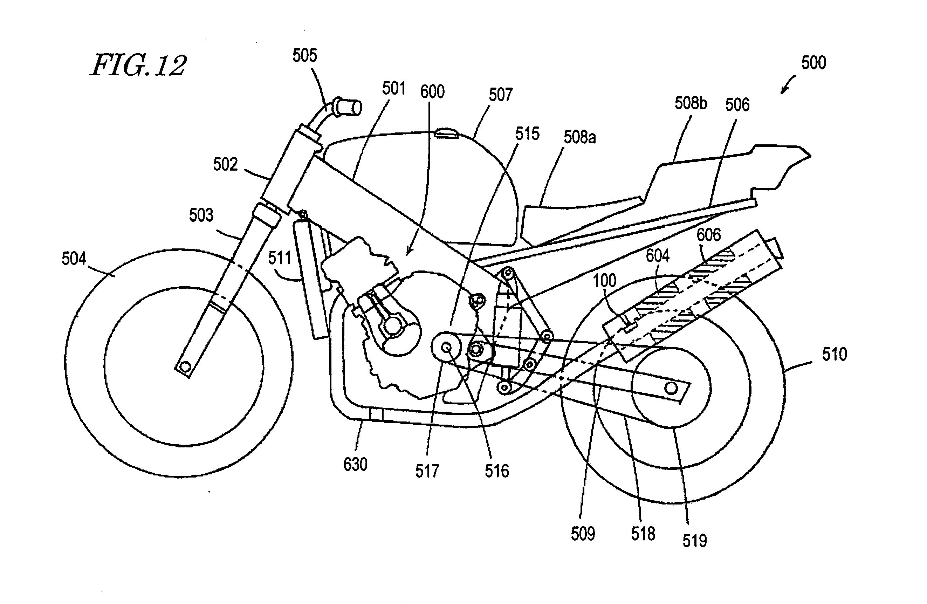

FIG. **12** schematically shows a motorcycle **500** incorporating the oxygen sensor **100** according to the present embodiment. The motorcycle **500** includes a body frame **501** and an internal combustion engine **600.** A head pipe **502** is provided at the front end of the body frame **501.** To the head pipe **502,** a front fork **503** is attached so as to be capable of swinging in the right-left direction. At the lower end of the front fork **503,** a front wheel **504** is supported so as to be capable of rotating. Handle bars **505** are attached to the upper end of the head pipe **502.**

A seat rail **506** is attached at an upper portion of the rear end of the body frame **501** so as to extend in the rear direction. A fuel tank **507** is provided above the body frame **501,** and a main seat **508a** and a tandem seat **508b** are provided on the seat rail **506.** Moreover, rear arms **509** extending in the rear direction are attached to the rear end of the body frame **501.** At the rear end of the rear arms **509,** a rear wheel **510** is supported so as to be capable of rotating.

The internal combustion engine **600** is held at the central portion of the body frame **501.** A radiator **511** is provided in front of the internal combustion engine **600.** An exhaust pipe **630** is connected to an exhaust port of the internal combustion engine **600.** An oxygen sensor **100,** a ternary-type catalyst **604,** and a muffler **606** are provided on the exhaust pipe **630.** The oxygen sensor **100** detects oxygen within the exhaust gas flowing in the exhaust pipe **630.**

A transmission **515** is linked to the internal combustion engine **600.** Driving sprockets **517** are attached on an output axis **516** of the transmission **515.** Via a chain **518,** the driving sprockets **517** are linked to rear wheel sprockets **519** of the rear wheel **510.**

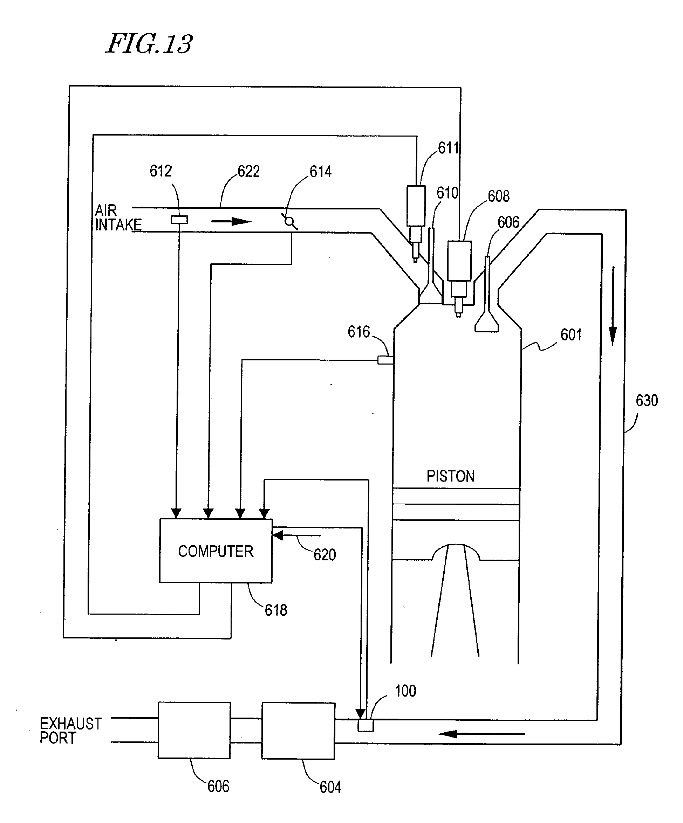

FIG. **13** shows main component elements of a control system of the internal combustion engine **600.** On a cylinder **601** of the internal combustion engine **600,** an intake valve **610,** an exhaust valve **606,** and a spark plug **608** are provided. There is also provided a water temperature sensor **616** for measuring the water temperature of the cooling water with which to cool the engine. The intake valve **610** is connected to an intake manifold **622,** which has an air intake. On the intake manifold **622,** an airflow meter **612,** a throttle sensor **614,** and a fuel injector **611** are provided.

The airflow meter **612,** the throttle sensor **614,** the fuel injector **611,** the water temperature sensor **616,** the spark plug **608,** and the oxygen sensor **100** are connected to a computer **618,** which is a control section. A vehicle velocity signal **620,** which represents the velocity of the motorcycle **500,** is also input to the computer **618.**

When a rider starts the internal combustion engine **600** by using a self-starting motor (not shown), the computer **618** calculates an optimum fuel amount based on detection signals and the vehicle velocity signal **620** obtained from the airflow meter **612,** the throttle sensor **614** and the water temperature sensor **616,** and based on the result of the calculation, outputs a control signal to the fuel injector **611.** The fuel which is injected from the fuel injector **611** is mixed with the air which is supplied from the intake manifold **622,** and injected into the cylinder **601** via the intake valve **610,** which is opened or closed with appropriate timing. The fuel which is injected into the cylinder **601** combusts to become exhaust gas, which is led to the exhaust pipe **630** via the exhaust valve **606.**

The oxygen sensor **100** detects the oxygen in the exhaust gas, and outputs a detection signal to the computer **618.** Based on the signal from the oxygen sensor **100,** the computer **618** determines the amount of deviation of the air-fuel ratio from an ideal air-fuel ratio. Then, the amount of fuel which is injected from the fuel injector **611** is controlled so as to attain the ideal air-fuel ratio relative to the air amount which is known from the signals obtained from the airflow meter **612** and the throttle sensor **614.** Thus, an air-fuel ratio controller which includes the oxygen sensor **100** and the computer (control section) **618** connected to the oxygen sensor **100** appropriately controls the air-fuel ratio of the internal combustion engine.

Although a motorcycle has been illustrated for instance, the oxygen sensor **100** (or **200, 300**) according to the present embodiments can also be suitably used for any other automotive vehicles, e.g., a four-wheeled automobile. The internal combustion engine is not limited to a gasoline engine, but may alternatively be a diesel engine.

Although the present invention has been exemplified as oxygen sensors in the present embodiments, the present invention is not limited to oxygen sensors, but can be suitably used for sensors for detecting various gases. For example, the present invention can be suitably used for an NOₓ sensor for detecting NOₓ concentration, a CO sensor for detecting CO concentration, and an HC sensor for detecting HC concentration.

According to the present invention, there is provided a gas sensor that facilitates downsizing, in which a sensor element and terminals are connected via a connection structure having excellent heat resistance. The present invention is suitably used for various gas sensors, such as an oxygen sensor.

The gas sensor according to the present invention has an excellent detection accuracy, and therefore is suitably used in an air-fuel ratio controller for various transportation apparatuses, e.g., a car, a bus, a truck, a motorbike, a tricycle, a tractor, an airplane, a motorboat, a vehicle for civil engineering use, or the like.

While the present invention has been described with respect to preferred embodiments thereof, it will be apparent to those skilled in the art that the disclosed invention may be modified in numerous ways and may assume many embodiments other than those specifically described above. Accordingly, it is intended by the appended claims to cover all modifications of the invention that fall within the true spirit and scope of the invention.

## Claims

1. A gas sensor comprising:
a sensor element having a gas detection layer for detecting a predetermined gas;
a lead for allowing electrical input/output to occur between the sensor element and the exterior;
a terminal for electrically connecting the sensor element to the lead; and
a bonding portion for bonding the terminal to the sensor element, wherein,
the bonding portion contains a glass material and a metal material which has a melting point of 1000°C or above.

2. The gas sensor of claim 1, wherein the metal material contains at least one of platinum, tungsten, molybdenum, nickel, iron, rhenium, chromium, and titanium.

3. The gas sensor of claim 1 or 2, wherein the metal material is platinum.

4. The gas sensor of any of claims 1 to 3, wherein the sensor element is disposed so that a layer normal direction of the gas detection layer is generally parallel to a longitudinal direction of the gas sensor.

5. The gas sensor of claim 4, wherein,
the sensor element further includes a substrate supporting the gas detection layer; and
the sensor element is disposed so that a principal face of the substrate is generally perpendicular to the longitudinal direction of the gas sensor.

6. The gas sensor of claim 5, wherein,
the substrate of the sensor element has a terminal insertion hole in which a top end of the terminal is inserted; and
the terminal is bonded to the sensor element in the terminal insertion hole.

7. The gas sensor of any of claims 1 to 6, wherein,
the terminal includes an electrode bar; and
the electrode bar is bonded to the sensor element via the bonding portion.

8. The gas sensor of claim 7, wherein the electrode bar is made of a metal material which has a melting point of 1000°C or above.

9. The gas sensor of claim 8, wherein the electrode bar is made of platinum.

10. The gas sensor of claim 8, wherein the electrode bar includes: an electrode bar main body which is made of a metal material containing at least one of tungsten, molybdenum, nickel, iron, rhenium, chromium, and titanium; and a platinum plating layer formed on a surface of the electrode bar main body.

11. The gas sensor of any of claims 7 to 10, further comprising a ceramic member through which the electrode bar is inserted, wherein
an end of the ceramic member that is closer to the sensor element surrounds the electrode bar and is bonded to the sensor element.

12. The gas sensor of claim 11, further comprising a glass sealing portion provided between the electrode bar and the ceramic member.

13. The gas sensor of any of claims 1 to 12, wherein the gas sensor is an oxygen sensor.

14. An air-fuel ratio controller comprising the gas sensor of claim 13.

15. A transportation apparatus comprising the air-fuel ratio controller of claim 14.
